**Europäisches Patentamt**

**European Patent Office**

**Office européen des brevets**

(19)

(11) Veröffentlichungsnummer: **0 137 055**
**B1**

(12) **EUROPÄISCHE PATENTSCHRIFT**

(45) Veröffentlichungstag der Patentschrift:
**20.07.88**

(21) Anmeldenummer: **83109122.8**

(22) Anmeldetag: **15.09.83**

(51) Int. Cl.⁴: **H 02 M 5/42**, H 02 H 7/122

(54) Schaltnetzteil mit Überstromschutz.

(43) Veröffentlichungstag der Anmeldung:
**17.04.85 Patentblatt 85/16**

(45) Bekanntmachung des Hinweises auf die Patenterteilung:
**20.07.88 Patentblatt 88/29**

(84) Benannte Vertragsstaaten:
**AT DE FR GB**

(56) Entgegenhaltungen:
DE-B-2 505 642
US-A-3 859 583
US-A-4 253 138
US-A-4 293 902
US-A-4 383 293

IBM TECHNICAL DISCLOSURE BULLETIN, Band 25, Nr. 6, November 1982, W. HEMENA "Current balance in push-pull inverter (chopper)", Seiten 2765-2766

(73) Patentinhaber: **IBM DEUTSCHLAND GMBH, Pascalstrasse 100, D-7000 Stuttgart 80 (DE)**
(84) Benannte Vertragsstaaten: **DE**

(73) Patentinhaber: **International Business Machines Corporation, Old Orchard Road, Armonk, N.Y. 10504 (US)**
(84) Benannte Vertragsstaaten: **FR GB AT**

(72) Erfinder: **Börtzel, Martin, Weissdornweg 14- 221, D-7400 Tübingen (DE)**
Erfinder: **Ludwig, Reinhold, Böhmerwaldstrasse 8, D-7033 Herrenberg 1 (DE)**
Erfinder: **Schmits, Wilhelm, Stuttgarter Strasse 17, D-7030 Böblingen (DE)**
Erfinder: **Weiss, Ulrich, Forchenweg 59, D-7031 Aidlingen (DE)**

(74) Vertreter: **Gaugel, Heinz, Dipl.- Ing., Schönaicher Strasse 220, D-7030 Böblingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 137 055 B1

## Beschreibung

Die Erfindung betrifft Gegentakt-Schaltnetzteile mit einer Schutzschaltung zum Schutz der Schalttransistoren des Netzteiles gegen Stromüberlastung, gemäß den Oberbegriffen der Ansprüche 1 und 6.

In einem solchen, aus der DE-AS-23 38 538 bekannten Schaltnetzteil wird in Serie zur Last ein kleiner Widerstand aufgenommen, an dem bei Stromüberlastung eine entsprechend hohe Spannung abfällt. Der Spannungsabfall an dem Widerstand wird mit einer Referenzspannung verglichen und bei Erreichen eines bestimmten Schwellwertes wird die Speisespannung des Netzteiles über ein Relais abgeschaltet. Diese Anordnung hat verschiedene Nachteile. Da in erster Linie die Schalttransistoren gegen zu hohen Strom zu schützen sind, der Strom jedoch an der Sekundärseite des Transformators des Netzteiles gemessen wird, ist die erzielte Wirkung nur indirekt und verzögert. Dies kann bei starker Überlastung zur Zerstörung der Schalttransistoren führen. Die Einfügung eines Serienwiderstandes zur Last erhöht in ungünstiger Weise den Innenwiderstand des Netzteiles und außerdem werden durch die Stromerfassung an der Sekundärseite des Transformators und nicht an der Primärseite zusätzliche Fehlermöglichkeiten geschaffen.

Dieses bekannte Schaltnetzteil hat außerdem den Nachteil, daß der für eine spezielle Verwendung bemessene Arbeitsbereich von Ausgangsstrom und Ausgangsspannung relativ klein ist und außerhalb dieses Bereiches besondere Regelschaltungen für Strom bzw. Spannung vorgesehen werden müssen.

Der in dieser bekannten Einrichtung verwendete Stromüberlastungsschutz entspricht ferner nicht den praktischen Bedürfnissen, da das Netzteil auch bei einer einmaligen, kurzzeitigen Überlastung abschaltet. Eine solche kurzzeitige Überlastung stellt nicht unbedingt eine Gefahr für die Schalttransistoren dar und deshalb sollte die Schutzschaltung eine solche kurzzeitige Überlastung tolerieren können.

In der DE-B-2 505 642 ist ein Gegentaktschaltnetzteil mit Maßnahmen zur Symmetrierung der Strombelastung der beiden Schalttransistoren beschrieben. Außerdem wird ein Schutzkreis gezeigt, der bei Überschreiten eines Referenzstromes in einem der beiden Schalttransistoren den jeweiligen Treiberimpuls zu den Schalttransistoren unterbricht. Hierzu weist jeder der beiden Schalttransistoren einen Emitterwiderstand auf. Die an den beiden Emitterwiderständen abfallende Spannung wird jeweils über eine Schwellwert-Vergleichsschaltung und ein ODER-Glied dem Rückstelleingang einer Kippschaltung zugeführt, deren Ausgangssignal im rückgestellten Zustand die Zuführung von Treiberimpulsen zu den Basiselektroden der beiden Schalttransistoren verhindert.

Weitere bekannt gewordene Schutzschaltung für Gegentakt- Schaltregler beziehen sich auf die Verhinderung der gleichzeitigen Stromleitung durch die beiden Schalttransistoren, da in einer solchen überlappten Leitezeit der Transformator kein Magnetfeld aufbaut und dadurch der Strom durch die Transistoren unzulässig ansteigt (IBM Technical Disclosure Bulletin, Dezember 1981, Seiten 3887/3888), und auf die Verhinderung der unsymmetrischen Stromführung durch die beiden Schalttransistoren (IBM Technical Disclosure Bulletin, November 1982, Seiten 2765 /2766).

Im IBM Technical Disclosure Bulletin, April 1981, Seiten 4994/4995 ist ein Schaltnetzteil mit einem überstromgeschützten Einzeltransistor beschrieben. Die Schutzschaltung gestattet sowohl die zeitliche Begrenzung einzelner pulsbreitenmodulierter Treiberimpulse, als auch die Abschaltung des Netzteiles bei einer andauernden Überlastung. Die Abschaltung basiert auf der Eigenschaft der Regelschleife im Schaltnetzteil, daß bei fallender Ausgangsspannung das zur Steuerung des Pulsbreitenmodulators verwendete Fehlersignal ansteigt. Dieses Fehlersignal wird über einen Tiefpaß geleitet und die Zuführung weiterer Treiberimpulse an den Schalttransistor wird verhindert, wenn das Fehlersignal lange Zeit auf hoher Amplitude war. Diese Verwendung des Fehlersignales zur Abschaltung des Schaltnetzteiles hat den Nachteil, daß nicht die eigentliche gefährliche Größe, nämlich der Strom durch den Schalttransistor zur Abschaltung des Netzteiles verwendet wird, sondern eine Unterspannung am Ausgang des Netzteiles. Die Überstromschutzschaltung kann nur während jedes Schaltzyklus auf die einzelnen Treiberimpulse wirken. Da die Leitezeit des Schalttransistors durch die Ladungsspeicherzeit des Transistors bedingt nicht unter eine gewisse Grenze gebracht werden kann, besteht trotz der Schutzschaltung die Gefahr, daß der Transistor zerstört wird. Die Verwendung des Fehlersignales zur Abschaltung des Reglers hat außerdem den Nachteil, daß ein Teil des oberen Bereiches dieses Fehlersignales nicht für die normale Regelung ausgenutzt werden kann, da ab einem bestimmten Wert die Abschaltung erfolgt und zu diesem Wert ein gewisser Sicherheitsabstand eingehalten werden muß.

Das IBM Technical Disclosure Bulletin, Oktober 1981, Seiten 2435/2436 bezieht sich ebenfalls auf eine Überstrom-Schutzschaltung in einem Netzteil mit einzelnem Schalttransistor. Auch in diesem Netzteil wird der Strom durch den einzelnen Schalttransistor zur eventuellen Begrenzung der pulsbreitenmodulierten Treiberimpulse ausgenutzt. Aus dem nicht begrenzten pulsbreitenmodulierten Treiberimpuls und dem eventuell begrenzten wird ein Differenzsignal gebildet, das nach Integration zur Abschaltung des Steueroszillators verwendet werden kann. Im Prinzip gelten also für diese Schaltung dieselben Nachteile, wie sie in Zusammenhang mit der vorhergehenden Schaltung beschrieben wurden. Beiden Schaltungen ist außerdem gemeinsam, daß keine Einrichtungen vorgesehen sind, die nach einem Abschalten des Netzteiles einen Wiederanlauf ermöglichen. Dies hat den Nachteil, daß bei einer nur kurzzeitigen und eventuell unschädlichen Überlastung das Netzteil genauso abgeschaltet würde wie bei einer langdauernden Überlastung.

Der vorliegenden Erfindung liegt daher die Aufgabe zugrunde, eine vom Strom durch die Schalttransistoren direkt gesteuerte Schutzschaltung gegen eine Stromüberlastung in einem Schaltnetzteil der eingangs beschriebenen Art anzugeben, welche auf eine momentane, oder länger andauernde Überbelastung getrennt reagiert und auch den Grad der Überlastung berücksichtigt.

Diese Aufgabe wird erfindungsgemäß durch die in den Ansprüchen 1 und 6 beschriebenen Einrichtungen gelöst.

Die erfindungsgemäße Schutzschaltung nach Anspruch 1 hat den Vorteil, daß bei einer geringen und kurzzeitigen Überlastung das Schaltnetzteil nicht sofort abgeschaltet wird. Vielmehr reagiert die Schaltung auf eine solche Überlastung erst durch Verkürzung der Zeitdauer der Treiberimpulse. Durch die Ladungsspeicherzeit der Schalttransistoren bedingt, kann eine Mindest-Leitzeit der Transistoren nicht unterschritten werden. Bei Fortbestehen einer erhöhten Überlastung des Netzteiles würden die Schalttransistoren trotz extremer zeitlicher Verkürzung der Treiberimpulse zerstört werden. Die erfindungsgemäße Schutzschaltung verschafft auch hiergegen einen Schutz, da der Schutzkreis mit Verzögerungswirkung bei Erreichen einer erhöhten Überlastung eine totale Abschaltung der Treiberimpulse bewirkt. Erfindungsgemäß können die Schwellwerte für die Sofortwirkung und die Verzögerungswirkung getrennt bemessen werden, wobei allerdings die Sofortwirkung zuerst eintritt.

Dadurch daß die Schutzschaltung direkt vom Momentanstrom durch den jeweils leitenden Schalttransistor gesteuert wird, ist gewährleistet, daß ein möglichst direkter Schutz erzielt wird. Das Ausfallen von Bauelementen zwischen dem Schalttransistor und dem Ausgang des Netzteiles kann also nicht zu einer fehlerhaften oder unterbliebenen Abschaltung des Netzteiles führen. Da die Schutzwirkung in jeder Schaltperiode, also für jeden einzelnen Schalttransistor getrennt eintreten kann, wird eine Symmetrierung der Belastung der beiden Schalttransistoren erzielt. Wird nämlich der kritische Stromwert durch einen Schalttransistor erreicht, wird dessen Leitezeit beendet und dafür durch die Regelschleife die Leitezeit des anderen Schalttransistors im folgenden Schaltzyklus verlängert, sofern dieser andere Schalttransistor den kritischen Stromwert noch nicht erreicht hat. Gemäß einer vorteilhaften Weiterbildung der Erfindung ist durch die zeitliche Begrenzung der Verhinderung der Erzeugung von Treiberimpulsen ein Wiederanlaufen des Netzteiles möglich. Liegt beim Wiederanlaufen die Überlastung noch vor, schaltet sich das Netzteil wiederum ab, wobei durch geeignete Diagnoseeinrichtungen eine totale Abschaltung erfolgen kann, wenn sich das Wiederanlaufen einige Male erfolglos wiederholt hat.

Die im Nebenanspruch 6 beschriebene Einrichtung hat im Prinzip die gleichen Vorteile wie das Netzteil nach Anspruch 1. Durch die Verwendung von binären logischen Signalen ergibt sich zusätzlich der Vorteil einer erhöhten Genauigkeit. Außerdem unterscheidet sich das Netzteil nach Anspruch 6 von dem in Anspruch 1 beschriebenen dadurch, daß keine gestaffelten Stromreferenzwerte für die Sofortwirkung und die Wirkung mit Verzögerung vorgesehen sind, sondern der in Anspruch 6 gekennzeichnete Schutzkreis mit Verzögerungswirkung tritt bei einer erhöhten Anzahl von Zyklen, in denen eine Stromüberlastung stattfindet, in Tätigkeit.

Weitere vorteilhafte Weiterbildungen der Erfindung sind den Unteransprüchen zu entnehmen.

Zwei Ausführungsbeispiele der Erfindung sollen nun anhand von Figuren beschrieben werden. Es zeigen:

Fig. 1    ein Blockschaltbild eines Gegentakt-Schaltnetzteiles mit einer Überstrom-Schutzschaltung,

Fig. 2    ein ersten Ausführungsbeispiel der Schutzschaltung,

Fig. 3    in bezug auf Fig. 2 den zeitlichen Verlauf verschiedener Signale bei einer geringen Überlastung des Netzteiles,

Fig. 4    in bezug auf Fig. 2 den zeitlichen Verlauf verschiedener Signale bei einer erhöhten Überlastung,

Fig. 5    eine rücklaufende Kennlinie,

Fig. 6    ein zweites Ausführungsbeispiel der Schutzschaltung, und

Fig. 7    den zeitlichen Verlauf verschiedener Steuersignale.

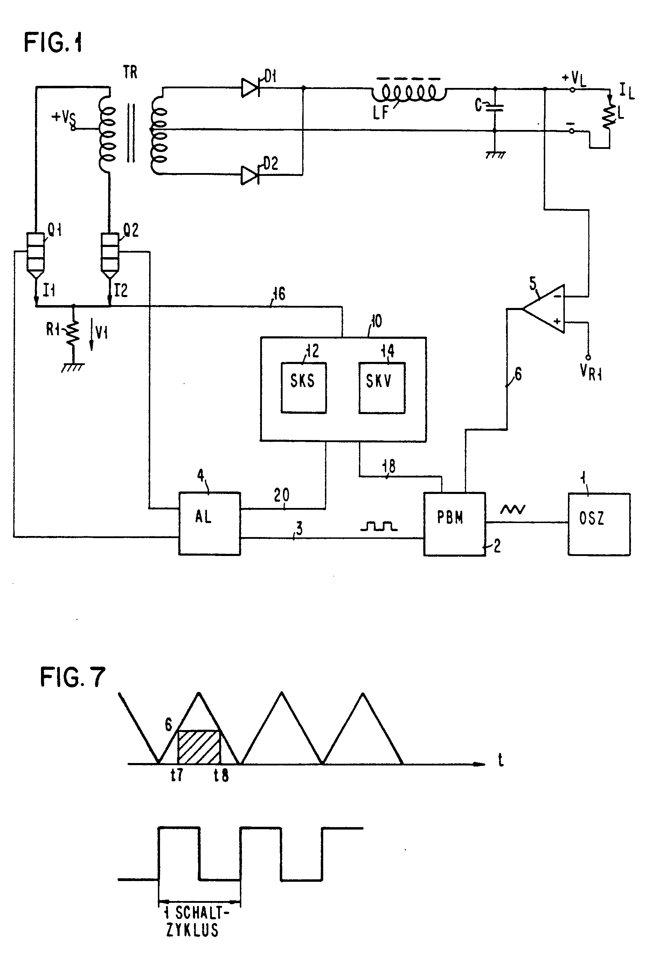

Fig. 1 zeigt ein Gegentakt-Schaltnetzteil, welches aus einer positiven Speisespannung $V_S$ eine positive Versorgungsspannung $V_L$ zur Versorgung einer Last L erzeugt. Die Speisespannung $V_S$ wird in der Mitte der Primärwicklung eines Transformators TR zugeführt. Zwei Schalttransistoren großer Leistung Q1 und Q2 können die Speisespannung über jeweils eine Hälfte der Primärwicklung mit Masse verbinden. Die transformierten Schaltimpulse werden durch zwei Gleichrichterdioden D1 und D2 gleichgerichtet, und über das aus der Induktivität LF und dem Kondensator C bestehende Siebglied wird die Versorgungsspannung $V_L$ erzielt. Die Mittenanzapfung der Sekundärwicklung wird mit Masse verbunden. Die Treiberimpulse zur Ansteuerung der Basiselektroden der Schalttransistoren Q1 und Q2 werden von einem Oszillator 1 abgeleitet, der eine Dreieck- oder Sägezahnspannung erzeugt, welche einem Pulsbreitenmodulator 2 zugeführt wird. Die Steuerung des Pulsbreitenmodulators 2 erfolgt über einen Operationsverstärker 5, welcher die Versorgungsspannung $V_L$ mit einer Referenzspannung $V_{R1}$ vergleicht und das aus dem Vergleich resultierende Fehlersignal auf der Leitung 6 dem Pulsbreitenmodulator 2 zuführt. Die am Ausgang des Pulsbreitenmodulators 2 auf der Leitung 3 erhaltenen pulsbreitenmodulierten Ansteuerimpulse werden einer Treiberschaltung 4 zugeführt, welche die Treiberimpulse in aufeinanderfolgenden Schaltzyklen abwechselnd den Schalttransistoren Q1 und Q2 zuführt. Die Emitterelektroden dieser beiden Schalttransistoren Q1 und Q2 sind miteinander verbunden und der jeweils fließende Emitterstrom I1 bzw. I2 wird über einen als gemeinsamer Emitterwiderstand ausgeführten kleinen Messwiderstand R1 nach Masse (0 Volt) geleitet.

In einem solchen Schaltnetzteil müssen die beiden Schalttransistoren gegen Stromüberlastungen geschützt werden. Hierzu ist erfindungsgemäß eine Schutzschaltung 10 vorgesehen, welche mit zwei verschiedenen Zeitkonstanten arbeitet. Ein Schutzkreis 12 mit Sofortwirkung beendet einen pulsbreitenmodulierten Treiberimpuls, wenn der Strom durch den gerade angesteuerten Schalttransistor einen kritischen Schwellwert erreicht. Ein Schutzkreis 14 mit Verzögerungswirkung wird aktiv, wenn Stromimpulse gemessen werden, welche eine gegenüber dem kritischen Wert noch weiter erhöhte Belastung darstellen. Die in der Primärwicklung des Transformators TR fließenden Impulsströme erzeugen am gemeinsamen Emitter-Widerstand R1 einen Spannungsabfall, welcher über die Leitung 16 der Schutzschaltung 10 zur Steuerung der Schutzkreise 12 und 14 zugeführt wird. Die Schutzschaltung 10 ist andererseits über die Leitungen 18 und 20 mit dem Pulsbreitenmodulator 2 und der Treiberschaltung 4 zur notwendigen Einwirkung auf die Treiberimpulse verbunden und setzt bei ihrem Wirksamwerden die Regelung der Spannung $V_L$ außer Kraft.

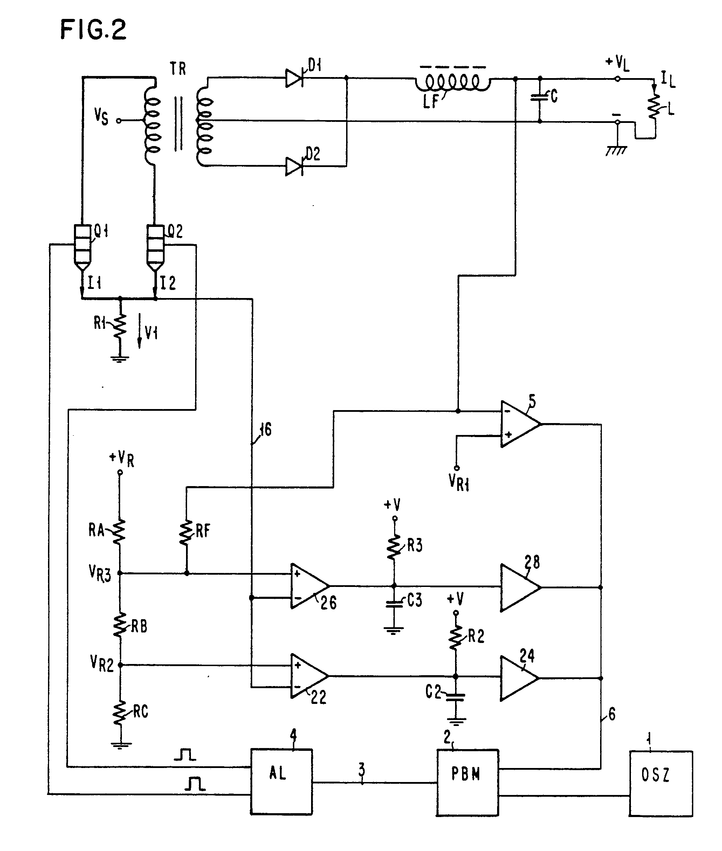

Fig. 2 zeigt ein erstes Ausführungsbeispiel der Erfindung. Der Schutzkreis 12 mit Sofortwirkung weist einen Komparator 22 auf, dessen Ausgang über den Trennverstärker 24 mit der Leitung 6, sowie über einen Widerstand R2 mit einer positiven Spannung +V und einen Kondensator C2 mit Masse verbunden ist.

Der Schutzkreis 14 mit Verzögerungswirkung weist einen Komparator 26 auf, dessen Ausgang über einen Trennverstärker 28 mit der Leitung 6, sowie über einen Widerstand R3 mit der Spannung +V und einen Kondensator C3 mit Masse verbunden ist. C2 und C3 sind bei Betrieb des Netzteiles ohne Überlastung voll geladen und haben dann keinen Einfluß auf die Regelung der Versorgungsspannung $V_L$ durch die Einheiten 5 und 2. Die durch die Ströme I1 und I2 am Widerstand R1 abfallende Spannung V1 wird jeweils den invertierenden Eingängen der Komparatoren 22 und 26 zugeführt. Die nicht-invertierenden Eingänge dieser Komparatoren sind jeweils mit einer Referenzspannung $V_{R2}$ bzw. $V_{R3}$ verbunden, die aus einer konstanten Spannung $+V_R$ über einen Spannungsteiler $R_A$, $R_B$, $R_C$ gewonnen werden. Die Referenzspannung $V_{R2}$ ist mit dem nicht-invertierenden Eingang des Komparators 22 und die Referenzspannung $V_{R3}$ ist mit dem nicht-invertierenden Eingang des Komparators 26 verbunden. $V_{R3}$ ist größer als $V_{R2}$.

Die Komparatoren 22 und 26 haben eine Ausgangsstufe mit offenem Kollektor. Ein positives Ausgangspotential wird also sehr hochohmig, das Massepotential jedoch niederohmig an die beiden Kondensatoren C2 und C3 abgegeben.

Der Operationsverstärker 5 weist vorzugsweise eine kurzschlußfeste Ausgangsstufe mit verhältnismäßig hohem Ausgangswiderstand auf.

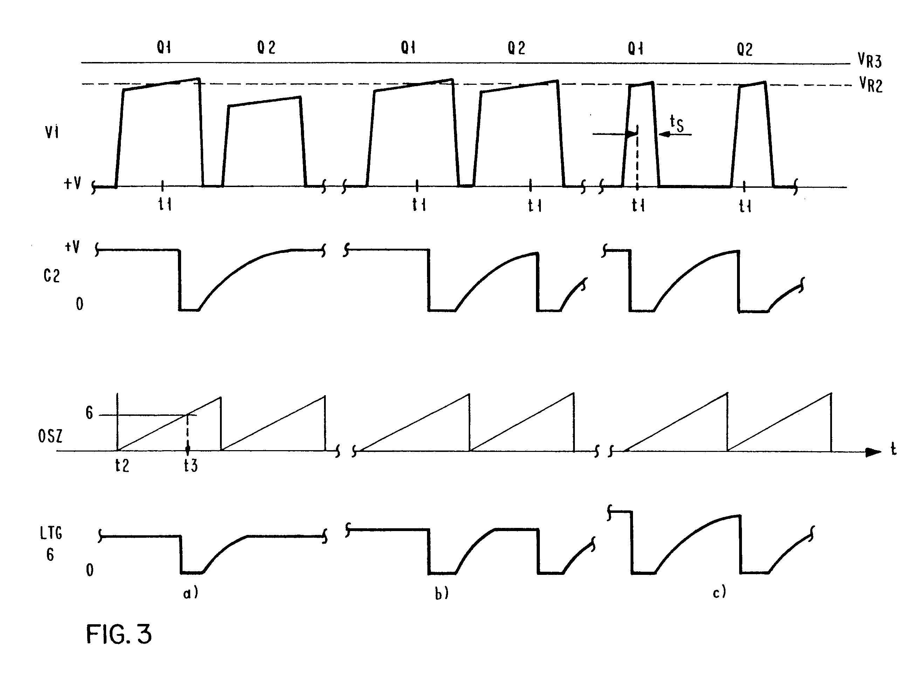

Die Wirkungsweise der Schutzschaltung 10 soll nun anhand der Fign. 3 bis 5 näher beschrieben werden.

Fig. 3 zeigt von oben nach unten vier verschiedene Spannungen: Die Spannung V1, welche am Widerstand R1 abfällt, die Spannung am Kondensator C2, die Sägezahnausgangsspannung des Oszillators 1 und die Spannung auf der Leitung 6. Wie in Fig. 3 ganz unten angegeben ist, werden die Signale für drei verschiedene Fälle a), b) und c) gezeigt, die dann eintreten, wenn der Widerstand der Last L immer mehr verkleinert wird.

**Fall a)**

Hier wird angenommen, daß infolge zunehmender Belastung wohl schon der Schalttransistor Q1 geringfügig überlastet ist, während der Transistor Q2, durch unvermeidliche Unsymmetrien bedingt, noch eine zunehmende Strombelastung verkraften kann.

Wie in der obersten Zeile von Fig. 3 angegeben ist, erreicht die Spannung V1 zum Zeitpunkt t1 die Referenzspannung $V_{R2}$; d.h. V1 wird zu diesem Zeitpunkt gleich einem kritischen Stromwert $I_c$ mal R1 ($V_{R2} = I_c \cdot R1$). Beim Erreichen der Referenzspannung $V_{R2}$ durch V1 schaltet der Komparator 22 um, wodurch sein Ausgangspotential gegen Null absinkt und der Kondensator C2 mit kleiner Zeitkonstante entladen wird. Dies ist in der Zeile 2 von Fig. 3 dargestellt. Über den Trennverstärker 24 wird auch das Potential auf der Leitung 6 abgesenkt (letzte Zeile Fig. 3). Bedingt durch die Ladungsspeicherzeit des Schalttransistors Q1 bleibt Q1 noch eine kurze Zeit leitend, wie auch aus Fig. 3 ersichtlich ist. Danach nimmt der Strom I1 ab, wodurch auch die Spannung V1 sinkt und der Ausgang des Komparators 22 wieder positiv wird. Der Kondensator C2 kann sich hierdurch über den Widerstand R2 aufladen. Die Zeitkonstante R2.C2 ist so gewählt, daß die Aufladung von C2 innerhalb eines Schaltzyklus zumindest soweit erfolgen kann, daß der Pulsbreitenmodulator 2 wieder Steuerimpulse abgeben kann. Andererseits ist die Zeitkonstante R2.C2 nicht so klein, daß innerhalb des Schaltzyklus wieder ein Ansteuerimpuls an die Basiselektrode geliefert werden könnte, d.h. ein "Doppelimpuls" innerhalb eines Schaltzyklus erfolgen würde. Der Schutzkreis 12 mit Sofortwirkung, der das RC-Glied R2.C2 aufweist, funktioniert also derart, daß die normale Pulsbreitenregelung durch das Fehlersignal vom Operationsverstärker 5 ausgeschaltet wird und statt dessen der Pulsbreitenmodulator 2 so zugesteuert wird, daß kein Treiberimpuls mehr erzeugt wird.

Die Pulsbreitenregelung des Pulsbreitenmodulators 2 ist in der 3. Zeile von oben in Fig. 3 für den ersten Schaltzyklus angedeutet. Das Fehlersignal auf der Leitung 6 wird mit dem vom Oszillator 1 erzeugten Sägezahn verglichen. Der pulsbreitenmodulierte Steuerimpuls beginnt mit der Rückflanke zum Zeitpunkt t2 und endet zum Zeitpunkt t3, zu dem das Fehlersignal auf der Leitung 6 der Sägezahnspannung gleich ist. Je tiefer also das Potential auf der Leitung 6 sinkt, desto schmälere Treiberimpulse werden erzeugt. Dementsprechend wird die Versorgungsspannung $V_L$ dem invertierenden Eingang des Operationsverstärkers 5 zugeführt. Die Zeit zwischen zwei aufeinanderfolgender Flanken des Sägezahns wird nachfolgend als Schaltperiode, bzw. als Schaltzyklus bezeichnet.

Im nächsten Zyklus soll angenommen werden, daß V1 nicht den Wert $V_{R2}$ erreicht, daß also der Transistor Q2 nicht überlastet wird. In diesem Schaltzyklus erfolgt also die Pulsbreitensteuerung über das Fehlersignal auf der Leitung 6 und kann sich außerdem der Kondensator C2 weiter aufladen.

Der vorliegende Fall a) zeigt auch deutlich, daß die erfindungsgemäße Schutzschaltung eine Symmetrierung der Belastung der beiden Schalttransistoren Q1 und Q2 bewirkt. Steigt nämlich der Strom $I_L$ an, was auch eine Vergrößerung des Stromes I1 nach sich zieht, so kann diese Vergrößerung nur bis zum kritischen Schwellwert gehen. Beim Erreichen dieses Schwellwertes wird wie oben beschrieben Q1 abgeschaltet. Besteht nach wie vor ein Bedarf $I_L$ zu erhöhen, so muß im folgenden Zyklus Q2 einen erhöhten Strom führen. Auch diese Erhöhung kann jedoch nur bis zum Schwellwert gehen, d.h. bis zum kritischen Stromwert $I_c = V_{R2}/R1$. Eine Überlastung eines der Schalttransistoren dadurch, daß zum Erreichen eines bestimmten Laststromes $I_L$ einer der Schalttransistoren stets einen zu hohen Strom zieht und der andere hingegen einen wesentlich geringeren wird also dadurch vermieden, daß für jeden Transistor nur ein bestimmter Stromwert zugelassen ist. Sollte der Regelkreis eine weitere Erhöhung des Stromes $I_L$ verlangen so wird nun der Schalttransistor, der noch nicht den zulässigen Maximalstrom führt, verstärkt, d.h. mit einem breiteren und evtl. höheren Treiberimpuls herangezogen.

**Fall b)**

Hier ist eine Situation gezeigt, in der infolge noch weiter zunehmender Belastung beide Emitterströme I1 und I2 den kritischen Wert $I_c$ erreichen. Wenn der Strom durch Q1 den kritischen Wert erreicht, wird C2 rasch entladen und die Ansteuerung von Q1 beendet. Durch die Speicherzeit leitet jedoch Q1 noch eine geringe Zeit. Zu Beginn der Ansteuerung von Q2 hat sich C2 wieder so weit aufgeladen, daß der Pulsbreitenmodulator 2 nicht mehr gesperrt wird. Jedoch wird auch während der Leitezeit von Q2 der Spannungswert $V_{R2}$ für V1 erreicht und C2 ebenfalls entladen, so daß der Steuerimpuls auf der Leitung 3 beendet wird.

Der maximal mögliche Strom $I_L$ durch die Last L wird vom Netzteil dann erreicht, wenn beide Schalttransistoren mit der maximalen Pulsbreite angesteuert werden, und der Strom durch jeden Transistor gerade am Ende des Schaltzyklus den kritischen Wert $I_c$ erreicht.

**Fall c)**

Aus der Schaltung nach Fig. 2 ist ersichtlich, daß der Strom durch die Primärwicklung des Transformators TR um so höher ist, je kleiner die Impedanz an der Sekundärseite des Transformators ist. Andererseits versucht die Regelschleife eine Verminderung der Spannung $V_L$ durch eine Verbreiterung der Treiberimpulse für die beiden Schalttransistoren auszugleichen. Bei einem Kurzschluß an den Ausgangsklemmen wurde also ein sehr hoher Strom durch die Primärwicklung des Transformators fließen.

Für den vorliegenden Fall c) wird angenommen, daß zwar kein Kurzschluß vorliegt, jedoch der Widerstand der Last L im Vergleich zu den übrigen Fällen a) und b) noch weiter verkleinert wird. Wie bereits im Zusammenhang mit Fig. 3 b) erklärt wurde, schaltet bei Erreichen einer Stromamplitude, für die V1 gleich der Referenzspannung $V_{R2}$ wird, der Schutzkreis 12 den Pulsbreitenmodulator 2 ab, so daß der Treiberimpuls mit sofortiger Wirkung beendet wird. Durch die Speicherzeit leitet Q1 jedoch während der in Fig. 3 gezeigten Zeit $t_S$ weiter. Auch Q2 wird im nächsten Zyklus zunächst eingeschaltet, praktisch sofort nachher jedoch durch Ansprechen des Schutzkreises 12 wieder ausgeschaltet.

In dem in Fig. 3 dargestellten Fall c) ist das Netzteil zwar überlastet, jedoch werden die Schalttransistoren noch nicht zerstört. Wird jedoch der Lastwiderstand weiter wesentlich verringert, was zum Beispiel bei einem Kurzschluß der Fall ist, so würden sich die Stromimpulse während jedes Zyklus durch den betreffenden Transistor noch weiter erhöhen und die Transistoren würden schließlich thermisch zerstört werden.

Um diese Zerstörung zu verhindern, ist der Schutzkreis 14 mit Verzögerungswirkung vorgesehen. Er verhindert das Entstehen von Treiberimpulsen während einer bestimmten Anzahl von Zyklen, die wählbar ist.

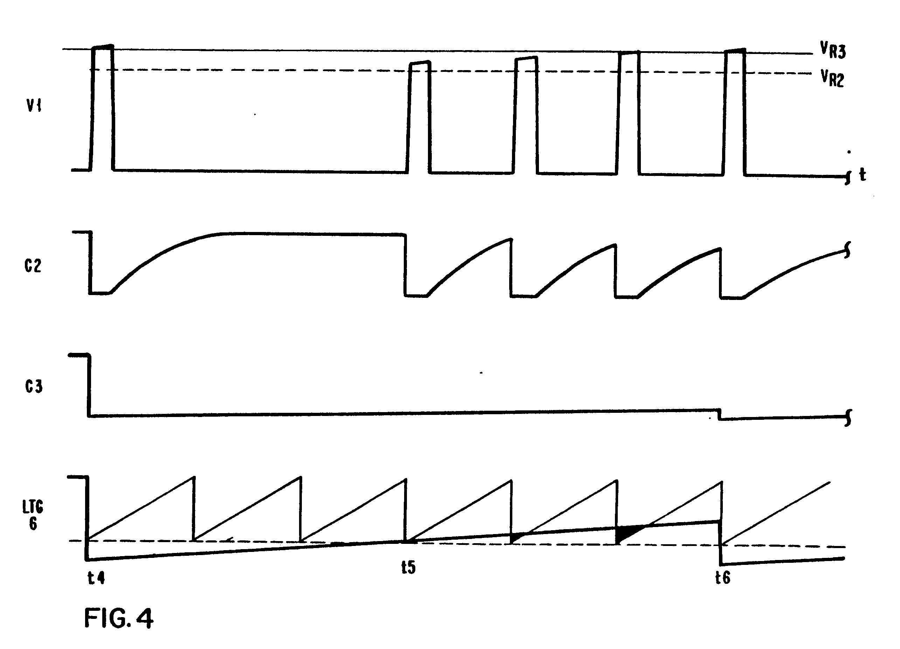

In Fig. 4 ist in der obersten Zeile wieder die Spannung V1 gezeigt und der erste Impuls soll das Niveau der Referenzspannung $V_{R3}$ erreichen. Dies ist dann der Fall, wenn ein erhöhter Überlastungsstrom $I_D$ durch einen Schalttransistor erreicht wird: $V_{R3} = R1 . I_D$. Hierdurch wird das Ausgangspotential des Komparators 26 (Fig. 2) nach Masse gesteuert und der Kondensator C3 kann sich rasch entladen. Dies ist in der 3. Zeile von Fig. 4 durch den Spannungssprung ganz links dargestellt (Zeitpunkt t4).

Das Null-Potential am Kondensator C3 wird über den Trennverstärker 28, der eventuell noch eine kleinere weitere Absenkung des Potentials in negativer Richtung bewirken kann, auf die Leitung 6 weitergegeben und sperrt den Pulsbreitenmodulator 2 vollkommen. Wie aus der untersten Zeile von Fig. 4 ersichtlich ist, liegt das Potential auf der Leitung 6 zur Zeit t4 sogar unterhalb der Dreiecksspitzen des vom Oszillator 1 gelieferten Sägezahns. Da nunmehr keiner der Transistoren Q1 oder Q2 Strom führt, gehen die Ausgänge der Komparatoren 22 und 26 wieder in positive Richtung und können die Kondensatoren C2 und C3 wieder geladen werden. Während C2 jedoch nach relativ kurzer Zeit wieder geladen ist, geht die Aufladung von C3 durch die größere Zeitkonstante R3.C3 wesentlich langsamer vor sich. Durch Wahl dieser Zeitkonstante kann bestimmt werden, wann das Schaltnetzteil sich nach einem momentanen Kurzschluß wieder erholt. Aus der untersten Zeile von Fig. 4 ist ersichtlich, daß durch die langsame Aufladung von C3 nach gewisser Zeit (Zeitpunkt t5) wieder ein Potential auf der Leitung 6 erreicht wird, welches über den untersten Spitzen der Sägezahnspannung liegt, so daß der Pulsbreitenmodulator 2 wieder Steuerimpulse abgeben kann, welche zunächst jedoch ziemlich schmal sind. Nach der durch die Zeitkonstante R3. C3 bestimmten Verzögerungszeit beginnt also das Schaltnetzteil wieder zu arbeiten und die Schalttransistoren Q1 und Q2 können wieder Strom führen. Dauert die erhöhte Überlastung jedoch an, sind die Emitterstromimpulse wieder sehr schmal und stark, so daß nach relativ kurzer Zeit wieder ein Zustand erreicht wird, in dem die Spannung V1 wieder die Höhe von $V_{R3}$ erreicht. Dies ist in Fig. 4 zum Zeitpunkt t6 dargestellt. Bei einem Kurzschluß am Ausgang des Netzteiles führt ein Wiederanlaufen des Netzteiles nicht sofort wieder zu einer Abschaltung, etwa zum Zeitpunkt t5, da die Induktivität $L_F$ verzögernd wirkt. In der untersten Zeile von Fig. 4 sind schwarz ausgefüllte Dreiecke in den Sägezähnen gezeigt, welche mit jedem Sägezahn größer werden und die Entstehung von Treiberimpulsen bewirken. Die Verhältnisse in der untersten Zeile von Fig. 4 sind jedoch der Deutlichkeit wegen in bezug auf die Spannung auf der Leitung 6 etwas übertrieben dargestellt. In der tatsächlich ausgeführten Schaltung steigt die Spannung auf der Leitung 6 nicht in dem Maße an, wie es in Fig. 4 gezeigt ist, wobei jedoch durch die maßstäblich übertriebene Darstellung das Prinzip der Schaltung nicht beeinträchtigt wird.

Es soll nunmehr die Wirkung des in Fig. 2 gezeigten Rückkopplungs-Widerstandes $R_F$ beschrieben werden. Aus Fig. 2 ist ersichtlich, daß bei einem Absinken der Versorgungsspannung $V_L$ durch den Widerstand $R_F$ auch ein Absinken der Referenzspannungen $V_{R2}$ und $V_{R3}$ erreicht wird. Solange keiner der Schutzkreise 12 oder 14 in Tätigkeit tritt, wird ein Absinken von $V_L$ durch eine Verbreiterung der Treiberimpulse ausgeglichen. Fallen jedoch durch eine stärkere Belastung der Versorgungsspannung ein Absinken von $V_L$ und das Erreichen der Referenzspannung $V_{R2}$ für beide Schalttransistoren zusammen, liegt also eine sehr starke Belastung am Ausgang des Netzteils vor, so wird in den darauffolgenden Zyklen die Referenzspannung $V_{R2}$ durch das Absenken ihres Absolutwertes mit Hilfe des Rückkupplungswiderstandes $R_F$ noch früher erreicht, was zu einem weiteren Absinken der Versorgungsspannung $V_L$ führt, usw. Wie bereits beschrieben, kann ein Absinken der Versorgungsspannung $V_L$ dann nicht von der Regelungseinrichtung des Netzteiles ausgeglichen werden, wenn die Schutzkreise 12, 14 ansprechen. Das jeweils niedrigste Ausgangspotential der Einheiten 22, 26 und 5 bestimmt nämlich das Potential auf der Leitung 6.

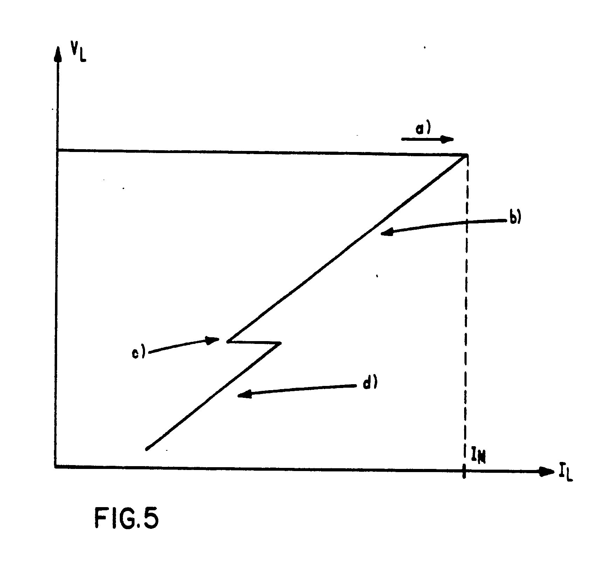

In der in Fig. 5 gezeigten Kennlinie ist zunächst der Fall a) dargestellt, in dem bei zunehmender Belastung zunächst der Strom $I_L$ ansteigt und wohl einer der Transistoren begrenzt wird, jedoch nicht der andere. Bei Vergrößerung der Belastung am Ausgang des Netzteiles steigt der Emitterstrom des anderen, oder beider Transistoren an, bis der in Fig. 3 gezeigte Fall b) beim Stromwert $I_M$ durch die Last L eintritt. Durch die geschilderte Rückkopplung der Versorgungsspannung $V_L$ auf die Referenzspannungen $V_{R2}$ und $V_{R3}$ wird in der Kennlinie nach Fig. 5 nun ein rücklaufender Ast b) erzielt, welcher sich bei fortschreitender Belastung bis zu einem Knickpunkt fortsetzt, der durch das Erreichen des Falles c) gekennzeichnet ist. Wie auch in Fig. 4 gezeigt, kann der Emitterstrom danach noch ein kleines Stück zunehmen, (siehe Fig. 4, rechts oben) bis der Schutzkreis 14 mit Verzögerungswirkung in Tätigkeit tritt, was in Fig. 5 durch den rücklaufenden Ast d) gezeigt ist.

Es folgen noch einige Kennwerte für die in Fig. 2 gezeigte Schaltung:

R1 : 50 milli Ohm
R2 : 11 k Ω
R3 : 20 k Ω

C2 : 1 nF
C3 : 8,2 µF

V1 : 48 V
+V : 5 V
$V_L$ : 5 V
$V_{R2}$: 0,914 V
$V_{R3}$: 0,951 V
$I_M$ : 66 A

Oszillatorfrequenz: 100 kHz

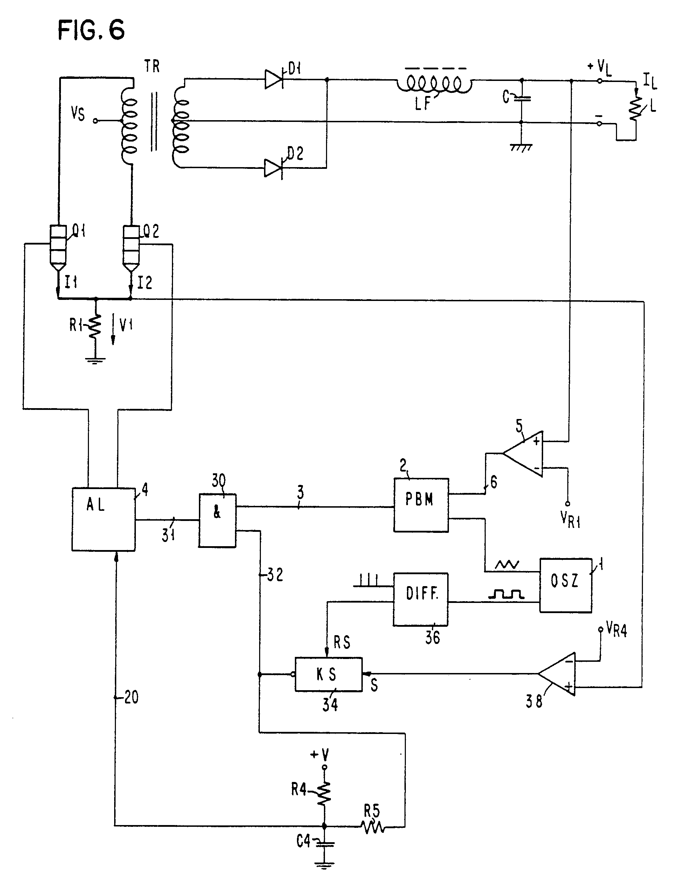

Anhand der Fign. 6 und 7 soll nunmehr ein zweites Ausführungsbeispiel der Erfindung beschrieben werden. In Fig. 6 sind Einheiten, welche gleichen Einheiten in Fig. 2 entsprechen auch mit dem gleichen Bezugszeichen versehen. Wie eingangs bereits erwähnt kann der Oszillator 1 Dreieck- oder Sägezahnspannungen liefern. In den Fign. 6 und 7 ist eine Betriebsweise gezeigt, welche Dreieckspannungen verwendet. In Zusammenhang damit wird die Versorgungsspannung $V_L$ diesmal dem nicht-invertierenden Eingang des Operationsverstärkers 5 und die Referenzspannung $V_{R1}$ dem invertierenden Eingang zugeführt. Die vom Pulsbreitenmodulator 2 erzeugten Steuerimpulse werden der Treiberschaltung 4 über ein UND- Glied 30 und die Leitung 31 zugeführt. Liegt keine Überlastung vor, führt die Leitung 32 ein positives Signal, was z. B. bei der Verwendung von TTL-Logik +5 Volt betragen kann. Dieses Signal wird vom invertierenden Ausgang einer Kippschaltung 34 erhalten, welche bei Abwesenheit einer Überlastung stets zurückgestellt ist. Ein Zurückstellen erfolgt am Ende jedes Steuerzyklus durch Rückstellimpulse von einem Differenzierkreis 36, welcher vom Oszillator 1 mit einer Rechteckspannung angesteuert wird. Die Frequenz dieser Rechteckspannung ist gleich der Frequenz der Dreieckspannung, mit welcher der Oszillator 1 den Pulsbreitenmodulator 2 steuert. Wird nun während eines Zyklus von einem der beiden Schalttransistoren Q1 oder Q2 ein derartig hoher Strom geführt, daß die Spannung V1 über dem Widerstand R1 gleich oder größer wird als eine Referenzspannung $V_{R4}$, welche im übrigen gleich groß sein kann, wie die in Fig. 2 verwendete Referenzspannung $V_{R2}$, so geht das Ausgangssignal des Operationsverstärkers 38 in die positive Richtung und setzt über den Eingang S die Kippschaltung 34. Beim Setzen der Kippschaltung 34 geht der Ausgang dieser Kippschaltung in negative Richtung, z. B. auf 0 Volt, und nimmt dadurch das zweite logische Eingangssignal am UND-Glied 30 weg. Hierdurch können die vom Pulsbreitenmodulator 2 gelieferten Steuerimpulse nicht mehr durchkommen und wird der gerade am Ausgang der Treiberschaltung 4 erzeugte Treiberimpuls mit sofortiger Wirkung beendet. Hinsichtlich dieser Beendigung entspricht also die Wirkungsweise der in Fig. 6 gezeigten Schaltung der in Fig. 3 zu den Zeitpunkten t1 gezeigten Wirkung. Am Ende des vorliegenden Steuerzyklus wird vom Differenzierkreis 36 wieder ein Rückstellimpuls geliefert und dadurch die Kippschaltung 34 wieder rückgestellt und am invertierenden Ausgang ein positives Ausgangssignal erzeugt. Hierdurch kann im nächsten Schaltzyklus der vom Pulsbreitenmodulator 2 gelieferte Steuerimpuls auf der Leitung 3 wieder das UND-Glied 30 passieren und der Treiberschaltung 4 über die Leitung 31 zugeführt werden. Der in Fig. 1 gezeigte Schutzkreis 12 mit Verzögerungswirkung weist in Fig. 6 das RC-Glied R4.C4 auf. Solange keine Stromüberlastung der Schalttransistoren eintritt, ist die Kapazität C4 voll geladen (beispielsweise auf auf +5 Volt) Tritt jedoch während eines Zyklus eine Überlastung auf und wird demzufolge die Kippschaltung 34 gesetzt, so kann sich der Kondensator C4 über den Widerstand R5 auf das am Ausgang der Kippschaltung vorhandene Null-Potential entladen. Angenommen wird, daß die Entladung über R5 rascher erfolgt, als die Ladung der Kapazität C4 über den Widerstand R4. Wird nun die Kapazität C4 während mehrerer aufeinanderfolgender Zyklen, z. B. während 100 Zyklen, durch die Kippschaltung 34 impulsweise entladen, so sinkt die Spannung an der Kapazität C4 soweit ab, daß über die Leitung 20 die Treiberschaltung 4 gesperrt wird.

Ähnlich wie in Fig. 4, links gezeigt, werden hiernach während einer bestimmten Anzahl Zyklen keine Treiberimpulse mehr erzeugt und hierdurch kann sich der Kondensator C4 wieder über den Widerstand R4 laden, da die Kippschaltung 34 im rückgestellten Zustand bleibt und demnach an ihrem Ausgang ein positives Signal abgibt. Ein erneuter Start des Schaltnetzteiles wird somit nach einer bestimmten Anzahl Zyklen ermöglicht. Die Zeitdauer der Verzögerungswirkung ergibt sich aus der Zeitkonstante R5.C4 und der Entladezeit (= Setzzustand von 34) während jedes Zyklus. Das Wiederanlaufen des Netzteiles kann selbsttätig oder von einem Rechner gesteuert erfolgen. Im Gegensatz zu der in Fig. 2 gezeigten Schaltung erfolgt in der in Fig. 6 gezeigten Schaltung ein Absinken der Versorgungsspannung $V_L$ nicht nach einer rücklaufenden Kennlinie. Außerdem ist zu sehen, daß die Schaltung nach Fig. 6 eine Kippschaltung und ein RC-Glied verwendet, während sich die Wirkung der in Fig. 2 gezeigten Schutzschaltung auf zwei RC-Glieder stützt. Die Verwendung einer Kippschaltung sowie von binären logischen Signalen hat den Vorteil, daß die Schaltung nach Fig. 6 weitgehend von der Toleranz der verwendeten Bauelemente unempfindlich ist.

Fig. 7 zeigt die vom Oszillator 1 erzeugte Dreieckspannung und Rechteckspannung. Ist die Versorgungsspannug $V_L$ im Vergleich zum Sollwert $V_{R1}$ zu niedrig, d.h. hat das vom Operationsverstärker 5 erzeugte und auf der Leitung 6 anliegende Fehlersignal ein relativ kleines positives Potential so ist aus Fig. 7 ersichtlich, daß ein relativ breiter Steuerimpuls zwischen den Zeitpunkten t7 und t8 erzeugt wird und hierdurch die Spannung $V_L$ ansteigt. Je mehr sich die Versorgungsspannung $V_L$ hierauf der Referenzspannung $V_{R1}$ nähert, desto positiver wird das Fehlersignal auf der Leitung 6 und desto kürzer werden auch die vom Pulsbreitenmodulator 2 erzeugten Steuerimpulse.

## Patentansprüche

1. Gegentakt-Schaltnetzteil mit Konstanthaltung der Ausgangsspannung durch Pulsbreitenregelung der Treiberimpulse für die beiden, im Gegentakt betriebenen Schalttransistoren (Q1, Q2) des Netzteils und mit einem rasch wirkenden Schutzkreis (12) zum Schutz der Schalttransistoren (Q1, Q2) welcher Schutzkreis durch den durch den jeweils leitenden Schalttransistor fließenden Emitterstrom gesteuert wird und bei Überschreiten eines ersten Referenzstromes ($I_c$) eine vorzeitige Beendigung des jeweiligen Treiberimpulses bewirkt, gekennzeichnet durch eine Schutzschaltung (10), in der mit dem rasch wirkenden Schutzkreis (12) ein weiterer Schutzkreis (14) kombiniert ist, der bei einem gegenüber dem ersten Referenzstrom ($I_c$) erhöhten Referenzstrom ($I_D$) anspricht und die Erzeugung weiterer Treiberimpulse während einer einer gewünschten Wiederansteuerverzögerung entsprechenden Anzahl von Schaltzyklen verhindert.

2. Schaltnetzteil nach Anspruch 1, dadurch gekennzeichnet, daß der Schutzkreis (12) mit Sofortwirkung einen ersten Komparator (22, Fig. 2) aufweist, dessen nicht-invertierender Eingang mit einer ersten Referenzspannung ($V_{R2}$) verbunden ist, dessen invertierender Eingang mit einem gemeinsamen Verbindungspunkt der Emitter der beiden Schalttransistoren (Q1, Q2) verbunden ist, wobei dieser Verbindungspunkt über einen gemeinsamen Emitterwiderstand (R1) mit Masse verbunden ist, so daß $V_{R2} = R1 \cdot I_c$, dessen Ausgang über einen Trennverstärker (24) mit einem Steuereingang (Leitung 6) des Pulsbreitenmodulators (2) des Schaltnetzteils verbunden ist, und dessen Ausgang ferner über einen ersten Kondensator (C2) mit Masse und einen ersten Widerstand (R2) mit einer Spannungsquelle (+V) verbunden ist, und wobei die Zeitkonstante dieses RC-Gliedes (R2.C2) annähernd ebenso groß ist wie die Periodendauer eines Schaltzyklus.

3. Schaltnetzteil nach Anspruch 1, dadurch gekennzeichnet, daß der Schutzkreis (14) mit Verzögerungswirkung einen zweiten Komparator (26) aufweist, dessen nicht-invertierender Eingang mit einer zweiten Referenzspannung ($V_{R3}$) verbunden ist, dessen invertierender Eingang mit einem gemeinsamen Verbindungspunkt der Emitter der beiden Schalttransistoren (Q1, Q2) verbunden ist, wobei dieser Verbindungspunkt ferner über einen gemeinsamen Emitterwiderstand (R1) mit Masse verbunden ist, dessen Ausgang über einen Trennverstärker (28) mit einem Steuereingang (Leitung 6) des Pulsbreitenmodulators (2) des Schaltnetzteiles verbunden ist, und dessen Ausgang ferner über einen zweiten Kondensator (C3) mit Masse und einen zweiten Widerstand (R3) mit einer Spannungsquelle (+V) verbunden ist, wobei die Zeitkonstante dieses RC-Gliedes wesentlich größer ist als die Periodendauer eines Schaltzyklus und der Schutzkreis (14) bei einem gegenüber dem kritischen Stromwert ($I_c$) erhöhten Stromwert $I_D = V_{R3}/R1$ anspricht.

4. Schaltnetzteil nach den Ansprüchen 2 und 3, dadurch gekennzeichnet, daß die Schwellwerte für den kritischen Stromwert ($I_c$) und den erhöhten Stromwert ($I_D$) getrennt einstellbar sind.

5. Schaltnetzteil nach den Ansprüchen 2 oder 3, dadurch gekennzeichnet, daß die erste und zweite Referenzspannung ($V_{R2}$, $V_{R3}$) aus einer konstanten Spannung ($V_R$) mittels eines aus drei Widerständen ($R_A$, $R_B$, $R_C$) bestehenden Spannungsteilers gewonnen werden und daß die Ausgangsklemme des Netzteiles, an der die Versorgungsspannung ($V_L$) erhalten wird, über einen Rückkopplungswiderstand ($R_F$) mit dem Verbindungspunkt zwischen dem ersten ($R_A$) mit der konstanten Spannung verbundenen, und dem zweiten ($R_B$) Widerstand des Spannungsteilers verbunden ist, an welchem Verbindungspunkt auch die zweite Referenzspannung ($V_{R3}$) erhalten wird, und wobei das andere Ende des zweiten Widerstandes ($R_B$) über den dritten Widerstand $R_C$), an dem die erste Referenzspannung ($V_{R2}$) erhalten wird, mit Masse verbunden ist, derart, daß bei weiterer Belastungserhöhung nach Erreichen des kritischen Stromwertes ($I_c$) eine rücklaufende Spannung/Strom-Kennlinie (Fig. 5) am Ausgang des Netzteiles ($V_L$, $I_L$) erhalten wird.

6. Gegentakt-Schaltnetzteil mit Konstanthaltung der Ausgangsspannung durch Pulsbreitenregelung der Treiberimpulse für die beiden, im Gegentakt betriebenen Schalttransistoren (Q1, Q2) des Netzteils und mit einem rasch wirkenden Schutzkreis zum Schutz der Schalttransistoren gegen Stromüberlastung, der durch den durch den jeweils leitenden Schalttransistor fließenden Emitterstrom gesteuert wird und bei Überschreiten eines Referenzstromes eine vorzeitige Beendigung des jeweiligen Treibersimpulses bewirkt, gekennzeichnet durch einen Schutzkreis (14) mit Verzögerungswirkung, mit einem UND-Glied (30, Fig. 6), welches die pulsbreitenmodulierten Impulse an eine Treiberschaltung (4) zur Erzeugung der Treiberimpulse für die beiden Schalttransistoren (Q1, Q2) weiterleitet, und mit einer Kippschaltung (34), die am Ende jedes Schaltzyklus in einen ersten Zustand gebracht wird, in dem sie das UND-Glied (30) durchschaltet, und durch einen Operationsverstärker (38), welcher den Spannungsabfall der Emitterströme (I1, I2) der beiden Schalttransistoren (Q1, Q2) über einen gemeinsamen Emitterwiderstand (R1) mit einer Referenzspannung ($V_{R4}$) vergleicht und dessen Ausgangssignal die Kippschaltung in einen zweiten, das UND-Glied sperrenden Zustand bringt, wenn die Referenzspannung überschritten wird, wobei Mittel vorgesehen sind, die nach einer mehrfachen Umschaltung der Kippschaltung in direkt aufeinanderfolgenden Schaltzyklen die Erzeugung weiterer Treiberimpulse während einer einer gewünschten Wieder austeuerverzögerung entsprechenden Anzahl von Schaltzyklen verhindert wird.

7. Schaltnetzteil nach Anspruch 6, dadurch gekennzeichnet, daß der Ausgang (32) der Kippschaltung (34) über einen Widerstand (R5) mit einem Steuereingang (Leitung 20) der Treiberschaltung (4) verbunden ist, und daß dieser Eingang über einen Kondensator (C4) mit Masse und einen weiteren Widerstand (R4) mit einer Spannungsquelle (+V) verbunden ist, wobei die Zeitkonstante (R4.C4) dieses RC-Gliedes groß ist gegen die Periodendauer eines Schaltzyklus, derart, daß bei mehrfacher Umschaltung der Kippschaltung in direkt aufeinanderfolgenden Steuerzyklen in den zweiten Zustand der Kondensator entladen und damit über den Steuereingang (20) die Treiberschaltung abgeschaltet, d.h. die Erzeugung weiterer Treiberimpulse verhindert wird.

8. Schaltnetzteil nach Anspruch 7, dadurch gekennzeichnet, daß die Schwelle für das Ansprechen des Schutzkreises (14) mit Verzögerungswirkung durch die Bemessung der Zeitkonstante des RC-Gliedes mit dem Kondensator (C4) und dem Widerstand (R5) wählbar ist.

9. Schaltnetzteil nach den Ansprüchen 1 und 6, dadurch gekennzeichnet, daß die Verhinderung der Erzeugung weiterer Treiberimpulse zeitlich begrenzt ist und hiernach ein selbsttätiges Wiederanlaufen der Schaltung erfolgt.

**Claims**

1. Push-pull power regulator, with the output voltage being kept constant through pulse width control of the driver pulses for the two push-pull operated regulator switching transistors (Q1, Q2), and with a high speed protective system (12) protecting the switching transistors (Q1, Q2), said protective system being controlled by the emitter current flowing through the respectively conducting switching transistors, and effecting upon the exceeding of a first reference current ($I_c$) a premature stopping of the respective driver pulse, characterized by a protective circuit (10) in which with the high speed protective system (12) another protective system (14) is combined which responds to a reference current ($I_D$) increased relative to the first reference current ($I_C$), and which prevents the generation of further driver pulses during a number of switching cycles corresponding to a desired re-control delay.

2. Power regulator as claimed in claim 1, characterized in that the protective circuit (12) with immediate effect comprises a first comparator (22, Fig. 2) whose non-inverting input is connected to a first reference voltage ($V_{R2}$), and whose inverting input is connected to a common point of connection of the emitters of the two switching transistors (Q1, Q2), this point of connection being connected to ground potential via a common emitter resistor (R1) so that $V_{R2} = R1\ I_c$, whose output is connected via a separating amplifier (24) to a control input (line 6) of the pulse width modulator (2) of the power regulator, and whose output is furthermore connected to ground potential via a first capacitor (C2) and via a first resistor (R2) to a voltage source (+V), the time constant of this RC element (R2 C2) approximately equalling the period duration of a switching cycle.

3. Power regulator as claimed in claim 1, characterized in that the protective circuit (14) with delay effect comprises a second comparator (26) whose non-inverting input is connected to a second reference voltage ($V_{R3}$), whose inverting input is connected to a common point of connection of the emitters of the two switching transistors (Q1, Q2), this point of connection being furthermore connected to ground via a common emitter resistor (R1), whose output is connected via a separating amplifier (28) to a control input (line 6) of the pulse width modulator (2) of the power regulator, and whose output is furthermore connected via a second capacitor (C3) to ground, and via a second resistor (R3) to a voltage source (+V), the time constant of this RC element being substantially greater than the duration of a switching cycle period, and the protective circuit (14) responding at a current value $I_D = V_{R3}/R1$ increased relative to the critical current value ($I_c$)

4. Power regulator as claimed in any one of claims 2 and 3, characterized in that the threshold values for the critical current value ($I_c$) and the increased

current value (I_D) are settable separately.

5. Power regulator as claimed in any one of claims 2 or 3,

characterized in that the first and second reference voltages ($V_{R2}$, $V_{R3}$) are obtained from a constant voltage ($V_R$) by means of a voltage divider consisting of three resistors ($R_A$, $R_B$, $R_C$), and that the output terminal of the power regulator receiving the supply voltage ($V_L$) is connected via a feedback resistor ($R_F$) to the point of connection between the first ($R_A$) voltage divider resistor connected to the constant voltage, and the second ($R_B$) voltage divider resistor, the second reference voltage ($V_{R3}$) being also supplied at this point of connection, and the other end of the second resistor ($R_B$) being connected to ground via the third resistor ($R_C$) supplying the first reference voltage ($V_{R2}$), in such a manner that if the load is further increased after the critical current value ($I_c$) has been reached a returning voltage/current characteristic (Fig. 5) is obtained at the output of the power regulator ($V_L$, $I_L$).

6. Push-pull power regulator, with the output voltage being kept constant through pulse width modulation of the driver pulses for the two switching transistors (Q1, Q2) of the regulator that are operated in the push-pull mode, and with a high speed protective system protecting the switching transistors against current overload, controlled by the emitter current flowing through the respectively conducting switching transistor, and effecting a premature stopping of the respective driver pulse when a reference current is exceeded,

characterized by a protective system (14) with delay effect, with an AND gate (30, Fig. 6) which passes on the puls width modulated pulses to a driver circuit (4) for generating the driver pulses for the two switching transistors (Q1, Q2), and with a flipflop (34) which at the end of each switching cycle is set into a first state where it switches the AND gate (30), and by an operation amplifier (38) comparing the voltage drop of the emitter currents (11, 12) of the two switching transistors (Q1, Q2) via a joint emitter resistor (R1) with a reference voltage ($V_{R4}$), and whose output signal sets the flipflop into a second state blocking the AND gate when the reference voltage is exceeded, with means being provided which after a multiple switching of the flipflop in directly successive switching cycles prevent the generation of further driver pulses during a number of switching cycles corresponding to a desired re-control delay.

7. Power regulator as claimed in claim 6,

characterized in that the output (32) of the flipflop (34) is connected via a third resistor (R5) to a control input (line 20) of the driver circuit (4), and that this input is connected via a capacitor (C4) to ground, and via a further resistor (R4) to a voltage source (+V), the time constant (R4 C4) of this RC element being high compared with the duration of a switching cycle period, in such a manner that upon a repeated switching of the flipflop in directly successive control cycles into the second state the capacitor is discharged, and thus via the control input (20) the driver circuit is switched off, i.e. the generation of further driver pulses is prevented.

8. Power regulator as claimed in claim 7,

characterized in that the threshold for the responding of the protective system (14) with delay effect is selectable by selecting the time constant value of the RC element with the capacitor (C4) and the resistor (R5).

9. Power regulator as claimed in claims 1 + 6,

characterized in that the prevention of the generation of further driver pulses is limited with respect to time, and that the circuit is subsequently started again automatically.

**Revendications**

1. Bloc d'alimentation à coupure symétrique maintenant constante la tension de sortie par réglage de la largeur des impulsions d'attaque pour les deux transistors de commutation (Q1, Q2), fonctionnant symétriquement, du bloc d'alimentation, et comportant un circuit de protection à action rapide (12) pour protéger les transistors de commutation (Q1, Q2), lequel circuit de protection est commandé par le courant d'émetteur qui passe par le transistor de commutation qui conduit dans chaque cas et provoque, lors du dépassement d'une première intensité de référence ($I_c$), un achèvement prématuré de l'impulsion d'attaque respective, caractérisé par un montage de protection (10) dans lequel est combiné avec le circuit de protection à action rapide (12) un autre circuit de protection (14) qui réagit, pour une intensité de référence ($I_D$) plus élevée que la première intensité de référence ($I_c$) et empêche la production d'autres impulsions d'attaque pendant un nombre de cycles de commutation correspondant à un retard souhaité à la reprise de l'attaque.

2. Bloc d'alimentation selon la revendication 1, caractérisé en ce que le circuit de protection (12) à action immédiate comporte un premier comparateur (22, figure 2) dont l'entrée non-inverseuse est reliée à une première tension de référence ($V_{R2}$), dont l'entrée inverseuse est reliée à un point de connexion commun des émetteurs des deux transistors de commutation (Q1, Q2), ce point de connexion étant relié à la masse par une résistance d'émetteur commune (R1), de telle façon que $V_{R2} = R1.I_c$, dont la sortie est reliée par un amplificateur séparateur (24) à une entrée de commande (ligne 6) du modulateur de largeur d'impulsions (2) du bloc d'alimentation, et dont la sortie est en outre reliée par un premier condensateur (C2) à la masse et par une première résistance (R2) à une source de tension (+V), et la constante de temps de ce circuit RC (R2, C2) étant sensiblement égale à la période d'un cycle de commutation.

3. Bloc d'alimentation selon la revendication 1, caractérisé en ce que le circuit de protection (14) à action retardée comporte un second comparateur (26) dont l'entrée non-inverseuse est reliée à une seconde tension de référence (V$_{R3}$), dont l'entrée inverseuse est reliée à un point de liaison commun des émetteurs des deux transistors de commutation (Q1, Q2), ce point de connexion étant en outre relié, par une résistance d'émetteur commune (R1), à la masse, dont la sortie est reliée, par un amplificateur séparateur (28), à une entrée de commande (ligne 6) du modulateur de largeur d'impulsion (2) du bloc d'alimentation, et dont la sortie est en outre reliée par un second condensateur (C3) à la masse et par une seconde résistance (R3) à une source de tension (+V), la constante de temps de ce circuit RC étant nettement supérieure à la période d'un cycle de commutation et le circuit de protection (14) réagissant pour une valeur d'intensité I$_D$ = V$_{R3}$/R1 nettement supérieure à la valeur d'intensité critique (I$_c$).

4. Bloc d'alimentation selon les revendications 2 et 3, caractérisé en ce que les valeurs de seuil pour l'intensité critique (I$_c$) et l'intensité supérieure (I$_D$) sont réglables séparément.

5. Bloc d'alimentation selon la revendication 2 ou 3, caractérisé en ce que les première et seconde tensions de référence (V$_{R2}$, V$_{R3}$) sont obtenues à partir d'une tension constante (V$_R$) au moyen d'un diviseur de tension comprenant trois résistances (R$_A$, R$_B$, R$_C$), et en ce que la borne de sortie du bloc d'alimentation, sur laquelle est obtenue la tension d'alimentation (V$_L$) est reliée par une résistance de réaction (R$_F$), au point de connexion entre la première résistance (R$_A$) du diviseur de tension reliée à la tension constante et la seconde résistance (R$_B$) de ce diviseur de tension, point de connexion sur lequel est obtenue également la seconde tension de référence (V$_{R3}$), et l'autre borne de la seconde résistance (R$_B$) étant reliée, par la troisième résistance (R$_C$), sur laquelle est obtenue la première tension de référence (V$_{R2}$), à la masse, de telle sorte que, lorsque la charge augmente encore après l'atteinte de l'intensité critique (I$_c$), on obtient une caractéristique tension/intensité rétrograde (figure 5) à la sortie du bloc d'alimentation (V$_L$, I$_L$).

6. Bloc d'alimentation symétrique maintenant la tension de sortie constante par réglage de la largeur des impulsions d'attaque pour les deux transistors de commutation (Q1, Q2), fonctionnant symétriquement, du bloc d'alimentation et comportant un circuit de protection à action rapide pour la protection des transistors de commutation contre les surintensités, qui est commandé par le courant d'émetteur qui passe par le transistor de commutation qui conduit dans chaque cas et provoque, en cas de dépassement d'une intensité de référence, un achèvement prématuré de l'impulsion d'attaque respective, caractérisé par un circuit de protection (14) à action retardée, comportant un circuit ET (30, figure 6) qui transmet les impulsions à largeur modulée à un circuit d'attaque (4) pour produire les impulsions d'attaque pour les deux transistors de commutation (Q1, Q2) et comportant un montage basculeur (34), qui est amené, à la fin de chaque cycle de commutation, dans un premier état dans lequel il ouvre le circuit ET (30), et par un premier amplificateur opérationnel (38) qui compare la chute de tension des courants d'émetteur (I1, I2) des deux transistors de commutation (Q1, Q2), sur une résistance d'émetteur commune (R1), à une tension de référence (V$_{R4}$), et dont le signal de sortie fait passer le montage basculeur dans un second état fermant le circuit ET, lorsque la tension de référence est dépassée, des moyens étant prévus pour empêcher, après une commutation multiple du circuit basculeur au cours de cycles de commutation successifs, la production d'autres impulsions d'attaque pendant un nombre de cycles de commutation correspondant à un retard souhaité de la reprise de l'attaque.

7. Bloc d'alimentation selon la revendication 6, caractérisé en ce que la sortie (32) du montage basculeur (34) est relié par une résistance (R5) à une entrée de commande (ligne 20) du montage d'attaque (4), et en ce que cette entrée est reliée par un condensateur (C4) à la masse et par une autre résistance (R4) à une source de tension (+V), la constante de temps (R4, C4) de ce circuit RC étant grande par rapport à la période d'un cycle de commutation, de telle sorte que, dans le cas d'une commutation multiple dans le second état du circuit basculeur au cours de cycles de commande se succédant directement, le condensateur se décharge et, par suite, coupe, par l'intermédiaire de l'entrée de commande (20), le montage d'attaque, c'est-à-dire empêche la production d'autres impulsions d'attaque.

8. Bloc d'alimentation selon la revendication 7, caractérisé en ce que le seuil pour la réaction du circuit de protection (14) à action retardée peut être choisi par l'ajustement de la constante de temps du circuit RC comportant le condensateur (C4) et la résistance (R5).

9. Bloc d'alimentation selon les revendications 1 et 6, caractérisé en ce que l'inhibition de la production d'autres impulsions d'attaque est limitée dans le temps et en ce qu'il se produit ensuite automatiquement une remise en route du montage.

## FIG. 1

## FIG. 7

1 SCHALT-
ZYKLUS

1

# FIG.2

FIG. 3

FIG. 4

FIG.5

# FIG. 6

11